# EUROPÄISCHE PATENTSCHRIFT

(11) **EP 2 005 371 B1**
(45) Veröffentlichungstag und Bekanntmachung des Hinweises auf die Patenterteilung: **27.10.2010**
(21) Anmeldenummer: 07723880.6
(22) Anmeldetag: 02.04.2007
(51) Int. Cl.: G06K 19/16, G06T 1/00, G11B 7/007

(54) **SPEICHERMEDIUM, VORZUGSWEISE FÜR EINEN TRÄGER, SOWIE LESEVORRICHTUNG UND VERFAHREN ZUM LESEN EINES SOLCHEN SPEICHERMEDIUMS**
STORAGE MEDIUM, PREFERABLY FOR A CARRIER, AND READING DEVICE AND METHOD FOR READING THE STORAGE MEDIUM
SUPPORT D'ENREGISTREMENT, DE PRÉFÉRENCE POUR UN ÉLÉMENT SUPPORT, AINSI QUE DISPOSITIF DE LECTURE ET PROCÉDÉ DE LECTURE D'UN TEL SUPPORT D'ENREGISTREMENT

(30) Priorität: 04.04.2006 DE 102006015604
(43) Veröffentlichungstag der Anmeldung: 24.12.2008
(73) Patentinhaber: Tesa Scribos Gmbh, 69126 Heidelberg (DE)
(72) Erfinder: BORGSMÜLLER, Stefan, 69126 Heidelberg (DE); NOEHTE, Steffen, 69469 Weinheim (DE); SCHULTE-WIEKING, Kay, 69115 Heidelberg (DE)
(74) Vertreter: Heins, Matthias
(86) Internationale Anmeldenummer: PCT/EP2007/002939
(87) Internationale Veröffentlichungsnummer: WO 2007/115721

(56) Entgegenhaltungen:
- EP-A- 1 553 780
- EP-A- 1 555 659
- DE-A1- 10 113 390
- US-A- 5 856 048
- US-A1- 2003 210 805
- US-A1- 2003 223 614

## Beschreibung

Die Erfindung betrifft ein Speichermedium, vorzugsweise für einen Träger, sowie eine Lesevorrichtung und ein Verfahren zum Lesen eines solchen Speichermediums.

Aus dem Stand der Technik (DE 101 13 390 A1) sind Speichermedien bekannt, die sowohl transparente als auch nicht transparente Stellen aufweisende teiltransparente Abschnitte aufweisen. Durch die Anordnung bzw. die Abfolge der transparenten und nicht transparenten Stellen des teiltransparenten Abschnitts können Informationen im Speichermedium gespeichert werden. Zum Auslesen des Informationsgehalts des Speichermediums wird der teiltransparente Abschnitt mit einer elektromagnetischen Strahlung bestrahlt. In Transmission ergeben sich dann, je nach Ausgestaltung des teiltransparenten Abschnitts, in der Regel kodierte Dateninformationen.

Eine Form der Ausgestaltung besteht darin, die Anordnung der transparenten und nicht transparenten Stellen als ein computergeneriertes Hologramm auszubilden. Computergenerierte Hologramme bestehen aus einer oder mehreren Schichten von Punktematrizen bzw. Punkteverteilungen, die bei einer Beleuchtung mit einem vorzugsweise kohärenten Lichtstrahl zu einer Rekonstruktion der in dem Hologramm einkodierten Informationen führen. Die Punkteverteilung kann dabei als Amplitudenhologramm, Phasenhologramm oder als Kinoform-, Fourier- oder Fresnell- Hologramm berechnet sein. Zur Herstellung von computergenerierten Hologrammen werden diese zuerst berechnet und anschließend mit einer geeigneten Schreibvorrichtung durch punktweises Einbringen von Energie in ein Speichermedium eingeschrieben. Die Auflösung der dabei entstehenden Punktematrix kann im Bereich bis unterhalb von 1 µm liegen. Somit können auf engem Raum Hologramme mit einer hohen Auflösung geschrieben werden, deren Information erst durch Beleuchten mit einem Lichtstrahl und Rekonstruieren des Beugungsbildes ausgelesen werden können. Die Größe der Hologramme kann dabei zwischen weniger als 1 mm² und mehreren 1 cm² betragen.

Die zuvor beschriebenen computergenerierten Hologramme können mit einer direkt sichtbaren Information kombiniert werden (Mikroschrift, Mikrobilder, kodierte Information).

Aus dem Stand der Technik sind eine Mehrzahl von Schreibvorrichtungen zum Schreiben von computergenerierten Hologrammen bekannt, die in ebenen Speichermedien die optischen Strukturen der Holgramme einschreiben. Beispielhaft wird dazu auf die Druckschriften WO 02/079881, WO 02/079883, WO 02/084404, WO 02/084405 und WO 03/012549 hingewiesen.

Ebenso sind eine Mehrzahl von Lesevorrichtungen bekannt, die geeignet sind, durch Beleuchten der Hologrammfläche mittels eines Lichtstrahls und einer geeigneten Optik die Rekonstruktion sichtbar oder mittels Aufnahmemitteln elektronisch darstellbar und auswertbar zu machen. Beispielhaft wird dabei auf die Druckschriften DE 101 37 832, WO 02/084588 und WO 2005/111913 verwiesen.

EP 1 555 659 A1 beschreibt ein mehrlagiges Speichermedium, welches den Transmissionsgrad als Managementinformation enthält. EP 1 553 780 A2 beschreibt das Einbetten eines digitalen Wasserzeichens in digitale Information auf einem Speichermedium, z.B. einer DVD.

Bei Speichermedien dieser Art besteht häufig Unsicherheit darüber, ob die auf dem Speichermedium gespeicherten Daten den Originaldaten entsprechen und/oder ob es sich bei dem Speichermedium um ein originales Speichermedium handelt. Weder eine Manipulation die Dateninformationen betreffend noch eine Kopie des Speichermediums kann ohne weiteres erkannt werden.

Der vorliegenden Erfindung liegt daher das technische Problem zugrunde, ein Speichermedium, eine Lesevorrichtung und ein Verfahren zum Auslesen eines Speichermediums zur Verfügung zu stellen, so dass eine Manipulation der Dateninformationen des Speichermediums oder eine von nicht autorisierter Stelle hergestellte Kopie des Speichermediums erkennbar ist.

Die vorliegende Erfindung, die dieses technische Problem löst, ist in den Ansprüchen 1-12 definiert.

Dieses technische Problem ist erfindungsgemäß bei einem Speichermedium, vorzugsweise für einen Träger, mit einer transparenten Schicht und einer Schicht eines opaken Materials dadurch gelöst, dass das Speichermedium für eine elektromagnetische Strahlung einen teiltransparenten Abschnitt mit einem mittleren Transmissionsgrad zwischen 0% und 100% aufweist und dass ein den Betrag des mittleren Transmissionsgrads umfassender Informationsgehalt in dem Speichermedium als computergeneriertes Hologramm gespeichert ist.

Bei dem erfindungsgemäßen Speichermedium kann es sich um ein Speichermedium unterschiedlicher Art, Form und Größe handeln. Es ist jedoch stets für eine elektromagnetische Strahlung zumindest teilweise transparent.

Ferner ist das Speichermedium vorzugsweise dazu ausgebildet, auf einem Träger angeordnet zu werden. Allerdings kann das Speichermedium grundsätzlich auch ohne einen zusätzlichen Träger als eigenständiges Speichermedium verwendet werden, sofern dieses hinreichend stabil ausgebildet ist.

Da das erfindungsgemäße Speichermedium verhältnismäßig klein ausgeführt sein kann, kann es zusammen mit einem Träger verwendet werden, auf den die Dateninformationen des Speichermediums abgestimmt sind bzw. Bezug nehmen. Das Speichermedium kann somit beispielsweise ähnlich der auf Produkten oder Verpackungen angeordneten Barcodes verwendet werden und während des gesamten Transportes oder der gesamten Verwendung der Produkte bedarfsweise produktspezifische, individualisierte Informationen für verschiedene Zwecke bereithalten.

Das Speichermedium kann alternativ oder zusätzlich auch als Echtheitsmerkmal für den eigentlichen Träger dienen. In diesem Fall kann der Träger ein im Wesentlichen beliebiges Produkt, dessen Verpackung, eine Kreditkarte, eine Eintrittskarte, ein Ausweis oder ein sonstiges Dokument sein, dessen Echtheit nachweisbar sein sollte. Bei dem Träger ist lediglich dafür Sorge zu tragen, dass die transparenten Stellen des teiltransparenten Abschnitts ggf. zusammen mit dem Träger von der elektromagnetischen Strahlung durchdrungen werden können.

Die Dateninformationen und/oder der Informationsgehalt eines Speichermediums können unter anderem als Buchstabenfolge, Zahlenfolge, 1D- bzw. 2D-Barcode und/oder Bild bzw. Abbildung (Silhouettenbild) im Speichermedium abgelegt sein. Letzteres kann insbesondere bei der Verwendung mit einem personalisierten Träger von Interesse sein. Grundsätzlich können alle im Stand der

Technik bekannten Arten der Codierung von Dateninformationen verwendet werden, die sich durch eine Abfolge von transparenten und nicht transparenten Stellen, welche aufgrund ihrer vorzugsweise geringen Größe auch als Pixel bezeichnet werden können, speichern lassen. Zum Schreiben und Lesen derartiger Dateninformationen können grundsätzlich Vorrichtungen verwendet werden, wie sie eingangs bereits im Zusammenhang mit computergenerierten Hologrammen diskutiert worden sind.

Bei der transparenten Schicht kann es sich um einen Kunststoff handeln, der einerseits zur Fixierung des opaken Materials dient und andererseits die gewünschten mechanischen Eigenschaften des Speichermediums bedingt. Bei dem opaken Material handelt es sich dagegen vorzugsweise um ein metallisches Material, das dann als dünne Schicht auf die transparente Schicht aufgedampft sein kann.

Der Abschnitt des Speichermediums, in dem die transparenten und nicht transparenten Stellen vorgesehen sind, wird als teiltransparenter Abschnitt bezeichnet, da dieser von einer elektromagnetischen Strahlung nur an den transparenten Stellen, also lediglich teilweise durchdrungen wird.

Je größer der transparente Flächenanteil des teiltransparenten Abschnitts ist, desto größer ist auch der den teiltransparenten Abschnitt durchdringende Anteil an der insgesamt auf den teiltransparenten Abschnitt treffenden Strahlung. Dieser Anteil wird auch als Transmissionsgrad bezeichnet und hat bei dem erfindungsgemäßen Speichermedium einen Wert kleiner 100% und größer 0%. Ein Wert von 100% entspricht dabei einer völligen Transparenz, während bei einem Wert von 0% keine Strahlung mehr durchdringt.

Vorzugsweise wird der Transmissionsgrad mit einer relativen Genauigkeit kleiner 5 % eingestellt. Insbesondere mit einer Vorrichtung, wie sie in der DE 10 2006 015 609 A1 beschrieben ist, ist eine prozentgenaue Einstellung des Transmissionsgrads möglich. Eine hohe Genauigkeit bei der Einstellung des Transmissionsgrads ist dabei wünschenswert, um die anschließende Überprüfung des Speichermediums auf Echtheit so zuverlässig wie möglich ausführen zu können.

In Abhängigkeit vom verwendeten Codierungsverfahren und von den Dateninformationen als solche ergibt sich für den teiltransparenten Abschnitt des beschriebenen Speichermediums ein bestimmter mittlerer Transmissionsgrad. Dieser kann entweder im Nachhinein bestimmt oder vorab berechnet werden. Letzteres ermöglicht es, den Betrag des mittleren Transmissionsgrads umfassenden Informationsgehalt parallel zu den eigentlichen Dateninformationen in das Speichermedium zu schreiben.

Ob es sich bei einem bestimmten Speichermedium um ein originales und/oder ein die originalen Dateninformationen aufweisendes Speichermedium handelt, lässt sich nun ganz einfach feststellen. Dazu wird der mittlere Transmissionsgrad des teiltransparenten Abschnitts bestimmt und der Betrag des mittleren Transmissionsgrads aus dem gespeicherten Informationsgehalt ausgelesen. Sind beide Werte des mittleren Transmissionsgrads identisch, handelt es sich mit einer hohen Wahrscheinlichkeit um ein originales Speichermedium bzw. ein Speichermedium mit den originalen Dateninformationen.

Bei nachträglich veränderten Dateninformationen hätten sich bei dem zuvor beschriebenen Vergleich unterschiedliche Werte des mittleren Transmissionsgrads ergeben. Für den Fall, dass anstelle des originalen Speichermediums ein lediglich mit einer Kopie der Dateninformationen versehenes Speichermediums vorgelegen hätte, wäre nicht der den originalen Betrag des mittleren Transmissionsgrads umfassende Informationsgehalt auslesbar gewesen. Somit hätte kein Vergleich zwischen ausgelesenem und ermitteltem Transmissionsgrad angestellt werden können. Das Verfahren ist ähnlich dem einer Prüfsumme bei digitaler Kodierung, wird hier jedoch optisch analog ermittelt. Um frei von Störungen durch Verschmutzungen oder anderen Störungen zu sein, sind vorzugsweise mindestens 2 in dem Grauwert unterschiedliche Bereiche als Eichfelder reserviert, die einen bestimmten Grauwert repräsentieren. Somit lassen sich beim Auslesen trotz Störung die Grauwerte der kodierten Information bestimmen.

Damit bei einer Manipulation der Dateninformationen eine Anpassung des den Betrag des mittleren Transmissionsgrads umfassenden Informationsgehalts nicht ohne weiteres möglich ist oder der den Betrag des mittleren Transmissionsgrads umfassende Informationsgehalt nicht ohne weiteres zusammen mit den eigentlichen Dateninformationen kopiert werden kann, sollte der entsprechende Informationsgehalt in einer sicheren Art und Weise gespeichert sein.

Hier kommt etwa die Möglichkeit einer Codierung in Frage, die ohne weiteres auch verhältnismäßig viel Speicherplatz beanspruchen kann. Denn es muss lediglich der den Betrag des mittleren Transmissionsgrads enthaltene Informationsgehalt kodiert werden. Die eigentlichen Dateninformationen an sich bedürfen keiner speicherplatzintensiven Codierung, so dass insgesamt eine sehr hohe Speicherdichte erzielt werden kann.

Um den Aufwand für eine Manipulation der Dateninformationen bzw. des Speichermediums an sich erheblich zu erhöhen, kann vorgesehen sein, dass die eigentlichen Dateninformationen und der den Betrag des mittleren Transmissionsgrads enthaltende Informationsgehalt auf unterschiedliche Weise ausgelesen und/oder geschrieben werden. Entweder werden für das Auslesen und/oder Schreiben andere Parameter verwendet, oder es ist sogar eine andere Vorrichtung und/oder ein anderes Funktionsprinzip für das Schreiben und Lesen der Dateninformationen einerseits und des den mittleren Transmissionsgrad enthaltenden Informationsgehalts andererseits vorgesehen.

Der Aufwand für eine Manipulation der Dateninformationen bzw. des Speichermediums an sich kann auch dadurch erhöht werden, dass die Dateninformationen individualisiert sind. Es reicht dann nämlich nicht aus, ein und dasselbe Speichermedium in großen Mengen vervielfältigen zu können.

Das Speichermedium genügt bedarfsweise auch ohne bestimmte im Speichermedium gespeicherte Dateninformationen als Echtheitsmerkmal. Dann ist eine willkürliche, flächige Verteilung transparenter und nicht transparenter Stellen (Pixel) im teiltransparenten Abschnitt vorgesehen, ohne dass dieser bestimmte Dateninformationen zugeordnet wären. Der mittlere Transmissionsgrad dieses teiltransparenten Abschnitts ist nichtsdestotrotz messbar und als solches auch im Speichermedium gespeichert.

Bei der vorliegenden Erfindung ist der den Betrag des mittleren Transmissionsgrads enthaltene Informationsgehalt im teiltransparenten Abschnitt vorgesehen. Auf diese Weise ist nicht ohne weiteres ersichtlich, dass das Speichermedium überhaupt eine Information über den Betrag des mittleren Transmissionsgrads des teiltransparenten Abschnitts enthält. Auch ist nicht ohne weiteres ersichtlich, wo auf dem Speichermedium dieser Informationsgehalt gespeichert ist. Der Informationsgehalt kann letztlich "versteckt" im teiltransparenten Abschnitt angeordnet sein. Dazu ist er vorzugsweise auf eine andere Art und Weise kodiert als die übrigen Dateninformationen.

Weiter enthält die flächige Verteilung des Transmissionsgrads innerhalb des teiltransparenten Abschnitts den den Betrag des mittleren Transmissionsgrads umfassenden Informationsgehalt. Dieser ist dann vorzugsweise im flächigen Verlauf des Transmissionsgrads zwischen zwei Punkten des teiltransparenten Abschnitts kodiert, also beispielsweise in Form einer bestimmten Abfolge von hohen und niedrigen Transmissionsgraden bzw. entsprechenden Transmissionsplateaus, enthalten.

Der Mittelwert des Transmissionsgrads zwischen den beiden Punkten kann vorzugsweise ebenfalls dem Betrag des mittleren Transmissionsgrads des teiltransparenten Abschnitts entsprechen. Dies kann zu einer alternativen Bestimmung des mittleren Transmissionsgrads oder als zusätzlicher Parameter bei der Ermittlung der Echtheit des Speichermediums bzw. dessen Dateninformationen benutzt werden.

Bei einem erfindungsgemäßen Speichermedium ist wenigstens ein Teil des teiltransparenten Abschnitts ein computergeneriertes Hologramm, das den den Betrag des mittleren Transmissionsgrads umfassenden Informationsgehalt enthält. Ein solches Hologramm lässt sich nämlich nicht ohne weiteres manipulieren oder kopieren. Außerdem kann ein entsprechendes Hologramm vorgesehen werden, ohne als solches direkt erkennbar zu sein. Beispielsweise kann das Hologramm nur mit elektromagnetischer Strahlung einer bestimmten Wellenlänge ausgelesen werden, die etwa im Bereich von IR- oder UV-Strahlung liegt.

Vorzugsweise ist der gesamte teiltransparente Abschnitt als wenigstens ein, vorzugsweise ebenfalls die übrigen Dateninformationen enthaltendes, Hologramm ausgebildet. Dann ist bereits das Kopieren der Dateninformationen als solches erschwert. Grundsätzlich ist hier die Verwendung wenigstens eines Transmissionshologramms bevorzugt.

Auch im Zusammenhang mit der Verwendung wenigstens eines Hologramms sind individualisierte Dateninformationen bevorzugt, da dann allein für das bloße Kopieren der Dateninformationen ein erheblicher Aufwand erforderlich ist. Der für das Kopieren erforderliche Aufwand ist auch bei sehr feinen bzw. kleinen Hologrammen in der Größenordnung weniger Mikrometer und darunter sehr hoch. Alternativ oder zusätzlich kann das Speichermedium noch einen Abschnitt mit einem homogenen Transmissionsgrad von 100% aufweisen, der zur Kalibrierung einer Lesevorrichtung zum Auslesen des Speichermediums dienen kann. Wird das Speichermedium beim Auslesen relativ zur dafür verwendeten Lesevorrichtung bewegt, kann der 100% transparente Abschnitt alternativ oder zusätzlich auch als Trigger für den Start und/oder das Ende einer Bestimmung des mittleren Transmissionsgrads des entsprechenden teiltransparenten Abschnitts dienen.

Anstelle des 100% transparenten Abschnitts oder zusätzlich zu diesem kann auch ein nicht transparenter Abschnitt mit einem homogenen Transmissionsgrad von 0% vorgesehen sein. Dabei kann dieser die gleichen Funktionen wie der 100% transparente Abschnitt hinsichtlich einer Kalibrierung und/oder eines Triggerns erfüllen.

Besonders bevorzugt ist es jedoch, wenn sowohl ein 100% transparenter Abschnitt als auch ein 0% transparenter Abschnitt gemeinsam vorgesehen sind. Dann grenzen die beiden homogenen Abschnitte vorzugsweise an zwei einander gegenüberliegenden Seiten an den teiltransparenten Abschnitt. So kann ein Start und ein Ende einer Bestimmung des mittleren Transmissionsgrads des teiltransparenten Abschnitts des Speichermediums getriggert und zusätzlich eine Zweipunktkalibrierung für die Transmissionsgrade 0% und 100% durchgeführt werden.

Durch wenigstens einen zusätzlichen teiltransparenten Abschnitt mit einem vorgegebenen, homogenen Transmissionsgrad zwischen 0% und 100% kann die Genauigkeit der Kalibrierung noch gesteigert werden. Dies gilt insbesondere dann, wenn sich das Speichermedium als solches nicht linear bezüglich der Transmissionseigenschaften verhält. Es versteht sich, dass grundsätzlich wenigstens ein Abschnitt mit einem vorgegebenen, homogenen Transmissionsgrad zwischen 0% und 100% auch alternativ zu wenigstens einem der beschriebenen Abschnitte mit einem homogenen Transmissionsgrad von 0% und/oder 100% verwendet werden kann.

Auch bei in hohem Maße nicht linearen Transmissionseigenschaften des Speichermediums können sehr gute Ergebnisse bezüglich der Auslesegenauigkeit des Speichermediums erhalten werden, wenn vier zusätzliche teiltransparente Abschnitte mit jeweils unterschiedlichen, vorgegebenen, homogenen Transmissionsgraden zwischen 0% und 100% vorgesehen sind. Die Transmissionsgrade der zusätzlichen teiltransparenten Abschnitte können je nach Anwendungsfall entweder gleichmäßig auf den Wertebereich zwischen 0% und 100% verteilt oder auf einen Abschnitt dieses Wertebereichs konzentriert sein.

Die Eignung des Speichermediums, insbesondere als Echtheitsmerkmal, lässt sich beispielsweise dadurch verbessern, dass der teiltransparente Abschnitt für eine elektromagnetische Strahlung einer kürzeren Wellenlänge (λ ≤ λₖ) und einer längeren Wellenlänge (λ ≤ λₗ; λₖ << λₗ) unterschiedliche Transmissionsgrade zwischen 0% und 100% aufweist. Erreicht wird diese Eigenschaft des Speichermediums vorzugsweise dadurch, dass im teiltransparenten Abschnitt Löcher in der Schicht opaken Materials mit unterschiedlichen effektiven Durchmessern vorgesehen werden. Die entsprechenden Löcher sind,dann jeweils nur für eine solche elektromagnetische Strahlung durchlässig, deren Wellenlänge kleiner als die effektiven Durchmesser der Löcher ist. Sofern die kürzere Wellenlänge λₖ kleiner ist als die Durchmesser der Löcher, ist der Transmissionsgrad für die kürzere Wellenlänge deutlich größer als für die längere Wellenlänge.

Im Speichermedium kann dann ein die Beträge des mittleren Transmissionsgrades für wenigstens zwei unterschiedliche Wellenlängen umfassender Informationsgehalt gespeichert sein. Die Echtheit des Speichermediums ist dann nur für den Fall gegeben, dass die für die vorgegebenen Wellenlängen ermittelten mittleren Transmissionsgrade mit den für die entsprechenden Wellenlängen im Speichermedium abgespeicherten Beträgen der mittleren Transmissionsgrade übereinstimmen.

Das eingangs genannte technische Problem ist bei einer Lesevorrichtung zum Lesen eines Speichermediums dadurch gelöst, dass eine Strahlungsquelle, eine Sensoreinheit und eine mit der Sensoreinheit verbundenen Ausleseeinheit vorgesehen sind, dass die Strahlungsquelle das Speichermedium wenigstens abschnittsweise mit einer elektromagnetischen Strahlung bestrahlt, dass die Sensoreinheit die Strahlung nach dem Auftreffen auf das Speichermedium wenigstens teilweise aufnimmt und ein Signal an die Ausleseeinheit abgibt, dass die Ausleseeinheit wenigstens aus einem Teil des Signals einen mittleren Transmissionsgrad eines teiltransparenten Abschnitts des Speichermediums bestimmt, dass die Ausleseeinheit wenigstens aus einem Teil des Signals den Betrag des mittleren Transmissionsgrads aus einem im Speichermedium als Hologramm gespeicherten Informationsgehalt ausliest und dass die Ausleseeinheit den bestimmten mittleren Transmissionsgrad und den ausgelesenen Betrag des mittleren Transmissionsgrads miteinander vergleicht.

Die erfindungsgemäße Lesevorrichtung bedarf lediglich einer Strahlungsquelle, einer Sensoreinheit und einer Ausleseeinheit. Die Lesevorrichtung kann daher kostengünstig und in hohen Stückzahlen zur Verfügung gestellt werden.

Die Strahlungsquelle dient der Bestrahlung des Speichermediums, das nicht als Ganzes bestrahlt werden muss. Es reicht aus, wenn das Speichermedium zeilenweise bestrahlt wird.

Ein Teil der auf das Speichermedium auftreffenden Strahlung durchdringt die transparenten Stellen des Speichermediums und wird wenigstens teilweise von einer Sensoreinheit aufgenommen. Als Sensoreinheit kommen alle bekannten Sensoreinheiten, etwa solche mit Fotozellen oder einer Kamera, in Frage. Die Sensoreinheit gibt zudem in Abhängigkeit der aufgenommenen Strahlung ein korrespondierendes, vorzugsweise mit dem Transmissionsgrad korrelierendes Signal an die Ausleseeinheit weiter.

Die Ausleseeinheit ermittelt dann aus wenigstens einem Teil des Signals den mittleren Transmissionsgrad des teiltransparenten Abschnitts. Aus dem gleichen Teil des Signals oder auch aus einem anderen Signal liest die Ausleseeinheit ferner den Betrag des mittleren Transmissionsgrads aus. Nachfolgend werden der ermittelte mittlere Transmissionsgrad und der ausgelesene Betrag des mittleren Transmissionsgrads von der Ausleseeinheit miteinander vergleichen.

Das Ergebnis dieses Vergleichs kann dann über eine geeignete Anzeigeeinrichtung angezeigt und/oder zur Steuerung eines nachfolgenden Verfahrens verwendet werden. Bei dem Verfahren kann es sich etwa um ein Sortierverfahren handeln, bei dem die Speichermedien bzw. Träger in Abhängigkeit des Ergebnisses des Vergleichs der Transmissionsgrade sortiert werden.

Bei einer bevorzugten Lesevorrichtung wird lediglich der teiltransparente Abschnitt gezielt von der Strahlenquelle bestrahlt. Ferner nimmt die Sensoreinheit nur die Transmission dieser Strahlung auf, wobei die Ausleseeinheit aus dem dadurch generierten Signal einerseits den mittleren Transmissionsgrad bestimmt und andererseits den abgespeicherten Betrag des mittleren Transmissionsgrads ausliest. Es ist also nicht erforderlich, weitere Bereiche des Speichermediums zu bestrahlen und die entsprechende Strahlung etwa mittels eines zweiten Sensors aufzunehmen.

Ferner wird der Betrag des mittleren Transmissionsgrads aus der zwischen zwei Punkten aufgenommenen flächigen Verteilung des Transmissionsgrads herausgelesen. Dabei ist der Betrag des mittleren Transmissionsgrads, insbesondere in entsprechend kodierter Form, ins Speichermedium geschrieben.

Besonders bevorzugt ist es, wenn der Betrag des mittleren Transmissionsgrads aus einer Rekonstruktion eines computergenerierten Hologramms herausgelesen wird. Repräsentiert das Hologramm den teiltransparenten

Abschnitt als solchen, wird der mittlere

Transmissionsgrad des Hologramms erfasst und vorzugsweise gleichzeitig aus dessen Rekonstruktion der Betrag des mittleren Transmissionsgrads erhalten.

Um nacheinander eine Vielzahl von Speichermedien auslesen zu können, kann eine Bewegungsvorrichtung zur Bewegung der Strahlungsquelle und der Speichermedien relativ zueinander vorgesehen sein. Vorzugsweise ist die Strahlenquelle fest installiert, wobei die Speichermedien an der Strahlenquelle vorbei bewegt werden. Denkbar ist aber auch, dass die Strahlungsquelle elektromagnetische Strahlung in zeitlich variierenden Richtungen abgibt, um so etwa einen bestimmten Bereich des Speichermediums zu scannen.

Weiter vorzugsweise verwendet die Ausleseeinheit einen 100% transparenten und/oder einen 0% transparenten Abschnitt als Trigger wahlweise für den Start und/oder das Ende einer Bestimmung des mittleren Transmissionsgrads. Besonders zweckmäßig ist es, wenn die Bestimmung des mittleren Transmissionsgrads unmittelbar nach dem 100% transparenten oder 0% transparenten Abschnitt startet bzw. unmittelbar vor dem 100% transparenten oder 0% transparenten Abschnitt endet. Der für den 100% transparenten und/oder den 0% transparenten Abschnitt ermittelte Signalwert kann ferner gleichzeitig zur Kalibrierung der Ausleseeinheit bzw. Sensoreinheit verwendet werden.

Insbesondere wenn das Auslesen des Speichermediums wegen nicht linearer Eigenschaften des Speichermediums oder der Lesevorrichtung erschwert ist, kann es zweckmäßig sein, wenn die Ausleseeinheit das Signal für zusätzliche, jedoch mit unterschiedlichen homogenen Transmissionsgraden zwischen 0% und 100% versehene teiltransparente Abschnitte zur Kalibrierung der Ausleseeinheit bzw. der Sensoreinheit verwendet. Die Verwendung von vier solcher zusätzlichen Abschnitte erscheint in solchen Fällen, besonders gute Resultate hinsichtlich der Auslesegenauigkeit zu ermöglichen.

Bedarfsweise ist eine zwischen einer kürzeren Wellenlänge und einer längeren Wellenlänge umschaltbare Strahlungsquelle vorgesehen. Dann bestimmt die Ausleseeinheit einmal für die kürzere Wellenlänge und einmal für die längere Wellenlänge den mittleren Transmissionsgrad, wobei die den Wellenlängen zugeordneten Beträge des mittleren Transmissionsgrads, vorzugsweise parallel, ausgelesen werden. Anschließend wird von der Ausleseeinheit für jede Wellenlänge separat der mittlere Transmissionsgrad und der ausgelesene Betrag des mittleren Transmissionsgrads verglichen.

Das eingangs genannte technische Problem ist bei einem Verfahren zum Auslesen eines Speichermediums durch die folgenden Schritte gelöst:
- das Speichermedium wird wenigstens abschnittsweise mit einer elektromagnetischen Strahlung bestrahlt,
- von einer Sensoreinheit wird die Strahlung nach dem Auftreffen auf das Speichermedium wenigstens teilweise aufgenommen und ein Signal an eine Ausleseeinheit abgegeben,
- von der Ausleseeinheit wird wenigstens aus einem Teil des Signals ein mittlerer Transmissionsgrad eines teiltransparenten Abschnitts des Speichermediums bestimmt,
- von der Ausleseeinheit wird wenigstens aus einem Teil des Signals der Betrag des mittleren Transmissionsgrads aus einem im Speichermedium als Hologramm gespeicherten Informationsgehalt ausgelesen und
- der bestimmte mittlere Transmissionsgrad und der ausgelesene Betrag des mittleren Transmissionsgrads werden miteinander verglichen.

Zum Auslesen des Speichermediums, was vorzugsweise mittels einer Lesevorrichtung der zuvor beschriebenen Art erfolgt, wird also eine elektromagnetische Strahlung auf das Speichermedium gerichtet, wobei diese Strahlung wenigstens einen teiltransparenten Abschnitt - wie dessen Bezeichnung bereits besagt - teilweise durchdringt und wenigstens teilweise von einer Sensoreinheit erfasst wird. In Abhängigkeit der erfassten Strahlung gibt die Sensoreinheit ein Signal an die Ausleseeinheit ab, die dieses Signal weiterverarbeitet und letztlich einen mittleren Transmissionsgrad des teiltransparenten Abschnitts daraus bestimmt. Aus dem gleichen Signal oder aber aus einem weiteren Signal, welches auf eine weitere von der Sensoreinheit in Transmission erfasste Strahlung zurückgeht, ermittelt die Ausleseeinheit ferner einen Informationsgehalt, welcher in das Speichermedium geschrieben ist und den Betrag des mittleren Transmissionsgrads enthält.

Durch einen Vergleich des ermittelten mittleren Transmissionsgrads und des ausgelesenen Betrags des mittleren Transmissionsgrads kann vorzugsweise automatisiert und mit einer hohen Sicherheit festgestellt werden, ob der auf dem Speichermedium gespeicherte Datensatz manipuliert oder das gesamte Speichermedium in nicht autorisierter Weise kopiert worden ist. Dies kann dann bedarfsweise auch einen Rückschluss auf die Echtheit nicht nur des Speichermediums als solches zulassen, sondern auch des Trägers, an dem das Speichermedium angebracht ist.

Im Folgenden wird die Erfindung anhand von Ausführungsbeispielen näher erläutert, wobei auf die beigefügte Zeichnung Bezug genommen wird. In der Zeichnung zeigen
- Fig. 1: ein auf einen Träger aufgebrachtes Speichermedium mit einem 0% transparenten und einem 100% transparenten Abschnitt zum Triggern des Starts und des Endes einer Bestimmung des mittleren Transmissionsgrads des teiltransparenten Abschnitt von 65%,
- Fig. 2: das Speichermedium gemäß Fig. 1 mit zusätzlichen teiltransparenten Abschnitten mit homogenen Transmissionsgraden zwischen 0% und 100% zum Kalibieren einer Lesevorrichtung,
- Fig. 3: ein Speichermedium mit einem 0% transparenten und einem 100% transparenten Abschnitt zum Kalibieren einer Lesevorrichtung, einem computergenerierten Hologramm mit einem mittleren Transmissionsgrad von 65% und einem 1D-Barcode,
- Fig. 4: eine Auftragung des Transmissionsgrads entlang des Speichermediums aus Fig. 1 in Richtung des Pfeils A,
- Fig. 5: eine Auftragung des Transmissionsgrads entlang des Speichermediums aus Fig. 2 in Richtung des Pfeils B und
- Fig. 6: eine Auftragung des Transmissionsgrads entlang des Speichermediums aus Fig. 3 in Richtung des Pfeils C.

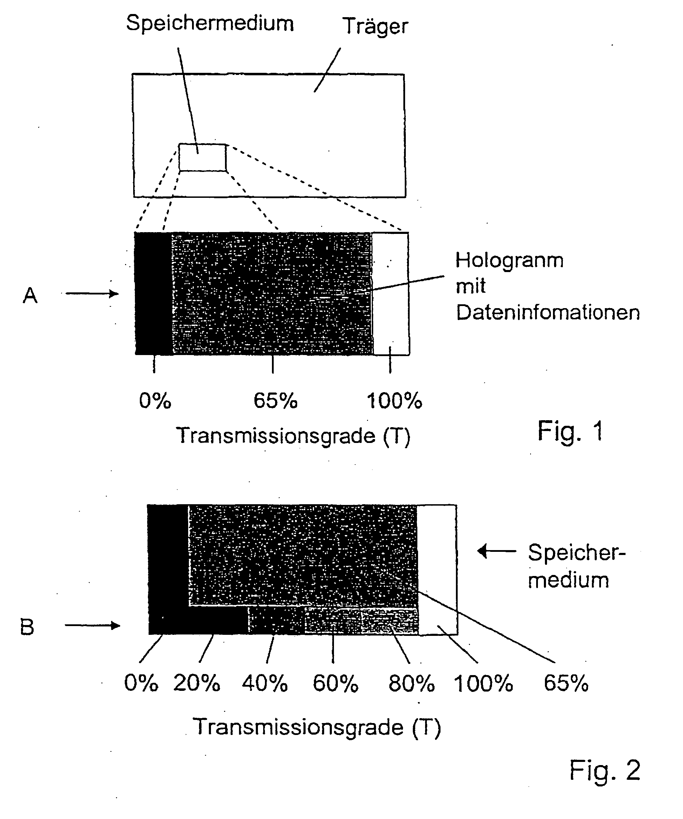

Fig. 1 zeigt einen Träger mit einem ersten Ausführungsbeispiel eines erfindungsgemäßen Speichermediums. Dieses ist in Fig. 1 unten vergrößert dargestellt. Das Speichermedium weist insgesamt drei Abschnitte mit unterschiedlicher Transmission auf. An der linken Seite ist ein Abschnitt mit 0% Transmission vorgesehen, der mittlere Abschnitt weist eine Transmission von 65 % auf und rechts schließt sich ein Abschnitt mit einer Transmission von 100 % an. Der mittlere Abschnitt ist als computergeneriertes Hologramm ausgeführt und kann somit mit einem geeigneten Lesestrahl, insbesondere einem Laserstrahl ausgelesen werden. Neben weiteren Informationen weist das Hologramm die Information über den Transmissionsgrad des mittleren Abschnittes von 65 % auf. Wird nun der Transmissionsgrad des mittleren Abschnittes gemessen und mit der Information aus der Rekonstruktion des Hologramms verglichen, kann eine Echtheitskontrolle ausgeführt werden.

Fig. 2 zeigt eine erweiterte Ausgestaltung des zuvor anhand der Fig. 1 beschriebenen Speichermediums. Hier ist zusätzlich zum mittleren Abschnitt unterhalb eine Reihe von kleineren Abschnitten mit festgelegten Transmissionsgraden angeordnet. Die Transmissionsgrade liegen bei 20 %, 40 %, 60 % und 80 %. Werden diese Abschnitte gesondert vermessen, dann kann anhand der bekannten Transmissionsgrade eine Kalibrierung des gemessenen Transmissionsgrades des darüber angeordneten mittleren Abschnittes durchgeführt werden. Eine Kalibrierung dieser Art kann insbesondere dann erforderlich sein, wenn das Material des Speichermediums nicht-lineare Transmissionseigenschaften aufweist.

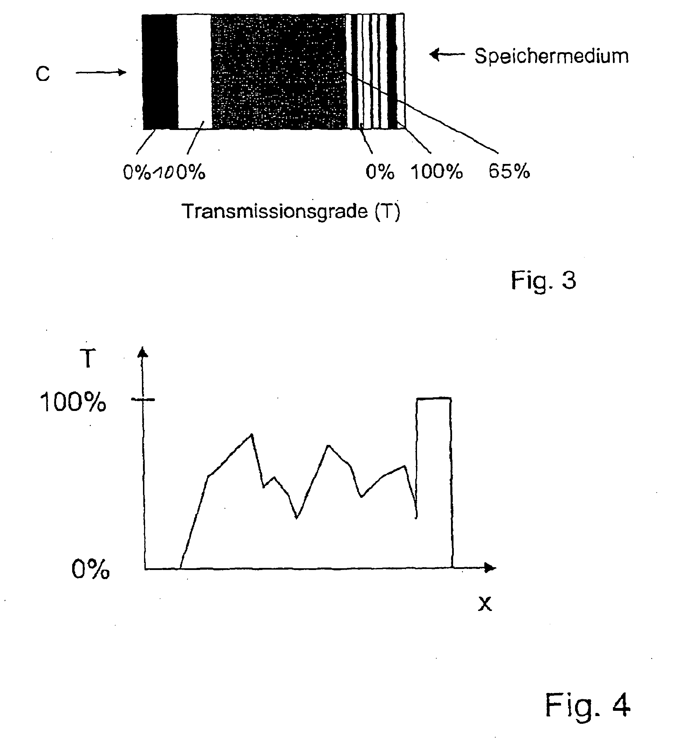

Fig. 3 zeigt ein weiteres Ausführungsbeispiel eines erfindungsgemäßen Speichermediums. Von links nach rechts befinden sich die folgenden Abschnitte mit unterschiedlicher Transmission: Abschnitt mit 0 % Transmission, Abschnitt mit 100 % Transmission, teiltransparenter mittlerer Abschnitt mit 65 % Transmission sowie ein 1D-Barcode bestehend aus mehreren kurzen Abschnitten abwechselnd mit 0% und 100 % Transmission. Der mittlere Abschnitt ist wieder als computergeneriertes Holgramm ausgebildet, das als zumindest eine Information den Transmissionsgrad 65 % enthält. Darüber hinaus weist der Barcode zumindest ebenfalls die Information 65 % Transmission des mittleren Abschnittes auf. Diese Information ist also zwei Mal in unabhängiger Weise im Speichermedium vorhanden. Beim Auslesen des Speichermediums kann daher die Echtheit durch einen Vergleich der gemessenen Transmission des mittleren Abschnittes mit der zwei Mal gespeicherten Information verglichen werden.

Es ist dabei auch möglich, dass der mittlere Abschnitt nicht als Hologramm ausgeführt ist und nur eine gleichmäßig verteilte Punkteverteilung aufweist, die insgesamt eine Transmission von 65 % hat. Dann ist die Information 65 % Transmission nur im 1D-Barcode am rechten Rand des Speichermediums enthalten.

Fig. 4 zeigt einen Verlauf der Transmission entlang des Speichermediums, wenn man in Fig. 1 in Richtung des Pfeils A die Transmission fortlaufend bestimmt. Die Transmission ist zunächst gleich Null, zeigt danach während des mittleren Abschnittes einen unregelmäßigen Verlauf und geht dann in einen Abschnitt mit 100 % Transmission über. Bildet man das Integral über den Transmissionsverlauf im Bereich des mittleren Abschnittes, dann erhält man die mittlere Transmission von 65 % dieses Abschnittes.

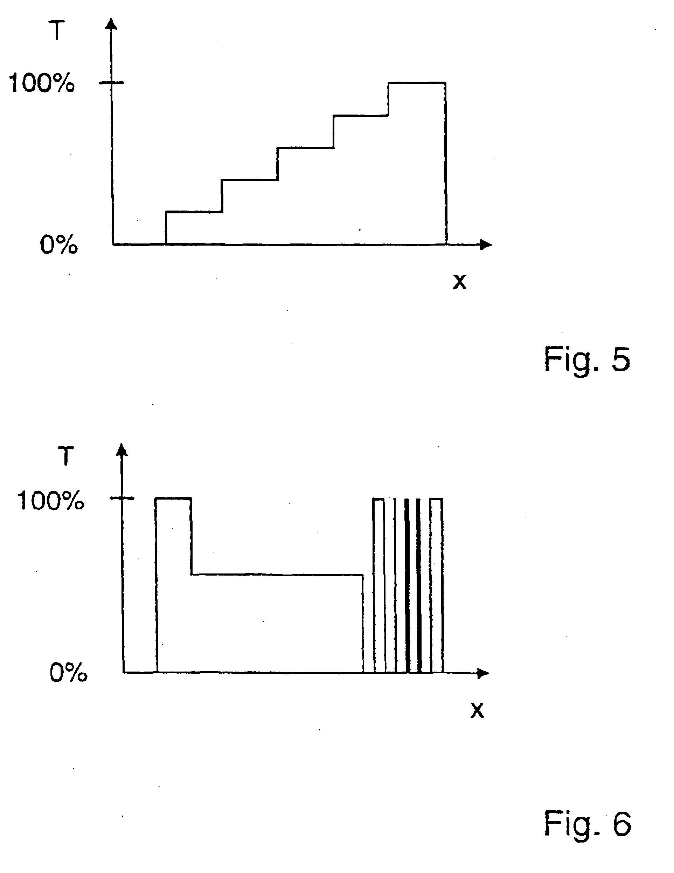

Fig. 5 zeigt den Verlauf der Transmission entlang des Weges, der mit dem Pfeil B in Fig. 2 angedeutet ist. Hier ist ein stufenförmiger Verlauf zu erkennen, der den einzelnen Transmissionen der Teilabschnitte mit 20 bis 80 % entspricht. Dieser Transmissionsverlauf kann zur Kalibrierung verwendet werden.

Fig. 6 zeigt schließlich den Transmissionsverlauf über das Speichermedium entlang des Weges, der mit Pfeil C in Fig. 3 angedeutet ist. Hier ist der anfängliche Wechsel zwischen 0 % und 100 % Transmission zu erkennen, bevor sich ein Bereich mit einer konstanten Transmission von 65 % anschließt. Rechts in Fig. 6 ist dann der typische schnell zwischen 0 % und 100 % Transmission wechselnde Abschnitt des Bar-Codes zu sehen.

## Patentansprüche

1. Speichermedium, vorzugsweise für einen Träger,
mit einer transparenten Schicht und einem für eine elektromagnetische Strahlung teiltransparenten Abschnitt mit einem mittleren Transmissionsgrad zwischen 0% und 100%, wobei wenigstens ein Teil des teiltransparenten Abschnitts ein computergeneriertes Hologramm ist,
**dadurch gekennzeichnet,**
**dass** ein den Betrag des mittleren Transmissionsgrads umfassender Informationsgehalt in dem Speichermedium gespeichert ist wobei die flächige Verteilung des Transmissionsgrads innerhalb des computergenerierten Hologramms den den Betrag des mittleren Transmissionsgrads umfassenden Informationsgehalt in kodierter Form enthält.

2. Speichermedium nach Anspruch 1, **dadurch gekennzeichnet,**
**dass** das Speichermedium einen einen Transmissionsgrad von 100% aufweisenden transparenten Abschnitt aufweist und/oder
einen einen Transmissionsgrad von 0% aufweisenden nicht transparenten Abschnitt aufweist.

3. Speichermedium nach Anspruch 2, **dadurch gekennzeichnet,**
**dass** der 100% transparente Abschnitt und der 0% transparente Abschnitt den teiltransparenten Abschnitt an zwei einander gegenüberliegenden Seiten begrenzen.

4. Speichermedium nach einem der Ansprüche 1 bis 3, **dadurch gekennzeichnet,**
**dass** wenigstens ein zusätzlicher teiltransparenter Abschnitt mit einem vorgegebenen Transmissionsgrad zwischen 0% und 100% vorgesehen ist, vorzugsweise, dass vier zusätzliche teiltransparente Abschnitte mit jeweils unterschiedlichen Transmissionsgraden zwischen 0% und 100% vorgesehen sind.

5. Speichermedium nach einem der Ansprüche 1 bis 4, **dadurch gekennzeichnet,**
**dass** der teiltransparente Abschnitt für eine elektromagnetische Strahlung einer kürzeren Wellenlänge (λ ≤ λₖ) und einer längeren Wellenlänge (λ ≤ λₗ; λ ₖ << λₗ) jeweils einen unterschiedlichen Transmissionsgrad zwischen 0% und 100% aufweist,
vorzugsweise, dass der Informationsgehalt die Beträge der mittleren Transmissionsgrade für die kürzere Wellenlänge und die längere Wellenlänge umfasst.

6. Lesevorrichtung für ein Speichermedium nach einem der Ansprüche 1 bis 5,
mit einer Strahlungsquelle, mit einer Sensoreinheit und mit einer mit der Sensoreinheit verbundenen Ausleseeinheit,
wobei die Strahlungsquelle das Speichermedium wenigstens abschnittsweise mit einer elektromagnetischen Strahlung bestrahlt,
wobei die Sensoreinheit die Strahlung nach dem Auftreffen auf das Speichermedium wenigstens teilweise aufnimmt und ein Signal an die Ausleseeinheit abgibt,
**dadurch gekennzeichnet,**
**dass** die Ausleseeinheit wenigstens aus einem Teil des Signals einen mittleren Transmissionsgrad eines teiltransparenten Abschnitts des Speichermediums bestimmt,
**dass** die Ausleseeinheit wenigstens aus einem Teil des Signals den Betrag des mittleren Transmissionsgrads aus einem im Speichermedium als Hologramm gespeicherten Informationsgehalt ausliest und
**dass** die Ausleseeinheit den bestimmten mittleren Transmissionsgrad und den ausgelesenen Betrag des mittleren Transmissionsgrads miteinander vergleicht.

7. Lesevorrichtung nach Anspruch 6, **dadurch gekennzeichnet,**
**dass** die Ausleseeinheit den Betrag des mittleren Transmissionsgrads aus der den teiltransparenten Abschnitt durchdringenden Strahlung ausliest,
vorzugsweise, dass die Ausleseeinheit den Betrag des mittleren Transmissionsgrads aus der flächigen Verteilung des Transmissionsgrads innerhalb des teiltransparenten Abschnitts herausliest.

8. Lesevorrichtung nach Anspruch 7, **dadurch gekennzeichnet,**
**dass** die Ausleseeinheit den Betrag des mittleren Transmissionsgrads aus einer Rekonstruktion eines Hologramms herausliest.

9. Lesevorrichtung nach einem der Ansprüche 6 bis 8, **dadurch gekennzeichnet,**
**dass** eine die Strahlungsquelle und das Speichermedium relativ zueinander bewegende Bewegungsvorrichtung vorgesehen ist und
**dass** die Ausleseeinheit ein Signal der Sensoreinheit für einen 100% Transmissionsgrad aufweisenden transparenten Abschnitt und/oder für einen 0% Transmissionsgrad aufweisenden nicht transparenten Abschnitt als Trigger für einen Start und/oder für eine Ende der Bestimmung des mittleren Transmissionsgrads verwendet.

10. Lesevorrichtung nach einem der Ansprüche 6 bis 9, **dadurch gekennzeichnet,**
**dass** die Ausleseeinheit das Signal der Sensoreinheit für den 100% Transmissionsgrad aufweisenden transparenten Abschnitt und/oder für den 0% Transmissionsgrad aufweisenden nicht transparenten Abschnitt zur Kalibrierung der Bestimmung des mittleren Transmissionsgrads verwendet und/oder dass die Ausleseeinheit das Signal der Sensoreinheit für wenigstens einen zusätzlichen einen Transmissionsgrad zwischen 0% und 100% aufweisenden teiltransparenten Abschnitt zur Kalibrierung der Bestimmung des mittleren Transmissionsgrads verwendet.

11. Lesevorrichtung nach einem der Ansprüche 6 bis 10, **dadurch gekennzeichnet,**
**dass** die Strahlungsquelle zwischen einer kürzeren Wellenlänge und einer längeren Wellenlänge umschaltbar ist,
**dass** die Sensoreinheit die Strahlung der kürzeren Wellenlänge und der längeren Wellenlänge aufnimmt,
**dass** die Ausleseeinheit jeweils für die kürzere Wellenlänge und die längere Wellenlänge den mittleren Transmissionsgrad bestimmt und den Betrag des mittleren Transmissionsgrads ausliest und
**dass** die Ausleseeinheit den bestimmten mittleren Transmissionsgrad und den ausgelesenen Betrag des mittleren Transmissionsgrads jeweils für die kürzere Wellenlänge und die längere Wellenlänge miteinander vergleicht.

12. Verfahren zum Auslesen eines Speichermediums mit einer Lesevorrichtung nach einem der Ansprüche 6 bis 11,
bei dem das Speichermedium wenigstens abschnittsweise mit einer elektromagnetischen Strahlung bestrahlt wird,
bei dem von einer Sensoreinheit die Strahlung nach dem Auftreffen auf das Speichermedium wenigstens teilweise aufgenommen und ein Signal an eine Ausleseeinheit abgegeben wird,
**dadurch gekennzeichnet,**
**dass** von der Ausleseeinheit wenigstens aus einem Teil des Signals ein mittlerer Transmissionsgrad eines teiltransparenten Abschnitts des Speichermediums bestimmt wird,
**dass** von der Ausleseeinheit wenigstens aus einem Teil des Signals der Betrag des mittleren Transmissionsgrads aus einem im Speichermedium als Hologramm gespeicherten Informationsgehalt ausgelesen wird und
**dass** der bestimmte mittlere Transmissionsgrad und der ausgelesene Betrag des mittleren Transmissionsgrads miteinander verglichen werden.

## Claims

1. Storage medium, preferably for a carrier, comprising a transparent layer and a section which is partly transparent for electromagnetic radiation and has an average transmittance of between 0% and 100%, wherein at least one part of the partly transparent section is a computer-generated hologram, **characterized in that** an information content comprising the magnitude of the average transmittance is stored in the storage medium, wherein the areal distribution of the transmittance within the computer-generated hologram contains the information content comprising the magnitude of the average transmittance in coded form.

2. Storage medium according to Claim 1, **characterized in that** the storage medium has a transparent section having a transmittance of 100% and/or has a non-transparent section having a transmittance of 0%.

3. Storage medium according to Claim 2, **characterized in that** the 100% transparent section and the 0% transparent section delimit the partly transparent section at two mutually opposite sides.

4. Storage medium according to any of Claims 1 to 3, **characterized**
**in that** at least one additional partly transparent section having a predetermined transmittance of between 0% and 100% is provided, preferably in that four additional partly transparent sections each having different transmittances of between 0% and 100% are provided.

5. Storage medium according to any of Claims 1 to 4, **characterized**
**in that** the partly transparent section has in each case a different transmittance of between 0% and 100% for electromagnetic radiation of a shorter wavelength (λ ≤ λₖ) and of a longer wavelength (λ ≤ λₗ; λₖ << λₗ), preferably in that the information content comprises the magnitudes of the average transmittances for the shorter wavelength and the longer wavelength.

6. Reading device for a storage medium according to any of Claims 1 to 5,
comprising a radiation source, comprising a sensor unit and comprising a read-out unit connected to the sensor unit,
wherein the radiation source irradiates the storage medium at least in sections with electromagnetic radiation,
wherein the sensor unit at least partly picks up the radiation after impingement on the storage medium and outputs a signal to the read-out unit,
**characterized**
**in that** the read-out unit determines an average transmittance of a partly transparent section of the storage medium at least from part of the signal,
**in that** the read-out unit, at least from part of the signal, reads out the magnitude of the average transmittance from an information content stored as a hologram in the storage medium, and
**in that** the read-out unit compares the average transmittance determined and the read-out magnitude of the average transmittance with one another.

7. Reading device according to Claim 6, **characterized**
**in that** the read-out unit reads out the magnitude of the average transmittance from the radiation penetrating through the partly transparent section, preferably in that the read-out unit reads out the magnitude of the average transmittance from the areal distribution of the transmittance within the partly transparent section.

8. Reading device according to Claim 7, **characterized**
**in that** the read-out unit reads out the magnitude of the average transmittance from a reconstruction of a hologram.

9. Reading device according to any of Claims 6 to 8, **characterized**
**in that** a movement device that moves the radiation source and the storage medium relative to one another is provided, and
**in that** the read-out unit uses a signal of the sensor unit for a transparent section having 1000 transmittance and/or for a non-transparent section having 0% transmittance as a trigger for a start and/or for an end of the determination of the average transmittance.

10. Reading device according to any of Claims 6 to 9, **characterized**
**in that** the read-out unit uses the signal of the sensor unit for the transparent section having 100% transmittance and/or for the non-transparent section having 0% transmittance for calibrating the determination of the average transmittance and/or
**in that** the read-out unit uses the signal of the sensor unit for at least one additional partly transparent section having a transmittance of between 0% and 100% for calibrating the determination of the average transmittance.

11. Reading device according to any of Claims 6 to 10, **characterized**
**in that** the radiation source can be changed over between a shorter wavelength and a longer wavelength, in that the sensor unit picks up the radiation of the shorter wavelength and of the longer wavelength,
**in that** the read-out unit determines the average transmittance in each case for the shorter wavelength and the longer wavelength and reads out the magnitude of the average transmittance, and
**in that** the read-out unit compares the average transmittance determined and the read-out magnitude of the average transmittance in each case for the shorter wavelength and the longer wavelength with one another.

12. Method for reading a storage medium by means of a reading device according to any of Claims 6 to 11,
in which the storage medium is irradiated at least in sections with electromagnetic radiation,
in which a sensor unit at least partly picks up the radiation after impingement on the storage medium and outputs a signal to a read-out unit,
**characterized**
**in that** an average transmittance of a partly transparent section of the storage medium is determined by the read-out unit at least from part of the signal, in that the read-out unit, at least from part of the signal, reads out the magnitude of the average transmittance from an information content stored as a hologram in the storage medium, and
**in that** the average transmittance determined and the read-out magnitude of the average transmittance are compared with one another.

## Revendications

1. Support de mémorisation, de préférence pour un élément porteur, comprenant une couche transparente et une section partiellement transparente pour un rayonnement électromagnétique avec un degré de transmission moyen compris entre 0 % et 100 %, au moins une partie de la section partiellement transparente étant un hologramme généré par ordinateur, **caractérisé en ce qu'**une information incluant la valeur du degré de transmission moyen est mémorisée dans le support de mémorisation, la distribution en deux dimensions du degré de transmission à l'intérieur de l'hologramme généré par ordinateur contenant l'information incluant la valeur du degré de transmission moyen sous une forme codée.

2. Support de mémorisation selon la revendication 1, **caractérisé en ce que** le support de mémorisation présente une section transparente présentant un degré de transmission de 100 % et/ou une section non transparente présentant un degré de transmission de 0 %.

3. Support de mémorisation selon la revendication 2, **caractérisé en ce que** la section transparente à 100 % et la section transparente à 0 % délimitent la section partiellement transparente sur deux côtés opposés l'un à l'autre.

4. Support de mémorisation selon l'une des revendications 1 à 3, **caractérisé en ce qu'**il est prévu au moins une section partiellement transparente supplémentaire ayant un degré de transmission prédéfini entre 0 % et 100 %, de préférence que sont prévues quatre section partiellement transparentes supplémentaires ayant respectivement des degrés de transmission différents entre 0 % et 100 %.

5. Support de mémorisation selon l'une des revendications 1 à 4, **caractérisé en ce que** la section partiellement transparente présente respectivement un degré de transmission différent entre 0 % et 100 % pour un rayonnement électromagnétique ayant une longueur d'onde plus courte (λ ≤ λₖ) et une longueur d'onde plus longue (λ ≤ λₗ, λₖ << λₗ), de préférence que l'information inclut les valeurs des degrés de transmission moyens de la longueur d'onde plus courte et de la longueur d'onde plus longue.

6. Dispositif de lecture pour un support de mémorisation selon l'une des revendications 1 à 5, comprenant une source de rayonnement, une unité de détection et une unité de lecture reliée avec l'unité de détection,
la source de rayonnement irradiant au moins certaines sections du support de mémorisation avec un rayonnement électromagnétique,
l'unité de détection enregistrant au moins partiellement le rayonnement après son incidence sur le support de mémorisation et délivrant un signal à l'unité de lecture,
**caractérisé en ce que** l'unité de lecture détermine au moins à partir d'une partie du signal un degré de transmission moyen d'une section partiellement transparente du support de mémorisation,
que l'unité de lecture lit au moins à partir d'une partie du signal la valeur du degré de transmission moyen depuis une information mémorisée dans le support de mémorisation sous la forme d'un hologramme et
que l'unité de lecture compare entre eux le degré de transmission moyen déterminé et la valeur lue du degré de transmission moyen.

7. Dispositif de lecture selon la revendication 6, **caractérisé en ce que** l'unité de lecture lit la valeur du degré de transmission moyen à partir du rayonnement qui traverse la section partiellement transparente,
de préférence que l'unité de lecture lit la valeur du degré de transmission moyen à partir de la distribution en deux dimensions du degré de transmission à l'intérieur de la section partiellement transparente.

8. Dispositif de lecture selon la revendication 7, **caractérisé en ce que** l'unité de lecture lit la valeur du degré de transmission moyen à partir d'une reconstruction d'un hologramme.

9. Dispositif de lecture selon l'une des revendications 6 à 8, **caractérisé en ce qu'**il est prévu un dispositif de déplacement qui déplace la source de rayonnement et le support de mémorisation l'un par rapport à l'autre et
que l'unité de lecture utilise un signal de l'unité de détection pour une section transparente présentant un degré de transmission de 100 % et/ou pour une section non transparente présentant un degré de transmission de 0 % comme déclencheur pour un début et/ou pour une fin de la détermination du degré de transmission moyen.

10. Dispositif de lecture selon l'une des revendications 6 à 9, **caractérisé en ce que** l'unité de lecture utilise le signal de l'unité de détection pour la section transparente présentant un degré de transmission de 100 % et/ou pour la section non transparente présentant un degré de transmission de 0 % pour le calibrage de la détermination du degré de transmission moyen et/ou
que l'unité de lecture utilise le signal de l'unité de détection pour au moins une section partiellement transparente supplémentaire présentant un degré de transmission entre 0 % et 100 % pour le calibrage de la détermination du degré de transmission moyen.

11. Dispositif de lecture selon l'une des revendications 6 à 10, **caractérisé en ce que** la source de rayonnement peut être permutée entre une longueur d'onde plus courte et une longueur d'onde plus longue, que l'unité de détection enregistre le rayonnement à la longueur d'onde plus courte et à la longueur d'onde plus longue,
que l'unité de lecture détermine le degré de transmission moyen à chaque fois pour la longueur d'onde plus courte et la longueur d'onde plus longue et lit la valeur du degré de transmission moyen et
que l'unité de lecture compare entre eux le degré de transmission moyen déterminé et la valeur lue du degré de transmission moyen à chaque fois pour la longueur d'onde plus courte et la longueur d'onde plus longue.

12. Procédé de lecture d'un support de mémorisation comprenant un dispositif de lecture selon l'une des revendications 6 à 11,
selon lequel au moins certaines sections du support de mémorisation sont irradiées avec un rayonnement électromagnétique,
selon lequel le rayonnement est au moins partiellement enregistré par une unité de détection après son incidence sur le support de mémorisation et un signal est délivré à une unité de lecture,
**caractérisé en ce**
**que** l'unité de lecture détermine au moins à partir d'une partie du signal un degré de transmission moyen d'une section partiellement transparente du support de mémorisation,
**que** l'unité de lecture lit au moins à partir d'une partie du signal la valeur du degré de transmission moyen depuis une information mémorisée dans le support de mémorisation sous la forme d'un hologramme et
**que** le degré de transmission moyen déterminé et la valeur lue du degré de transmission moyen sont comparés entre eux.
